Europäisches Patentamt

European Patent Office

Office européen des brevets

(11) Veröffentlichungsnummer: **0 352 702**

**A2**

(12) **EUROPÄISCHE PATENTANMELDUNG**

(21) Anmeldenummer: **89113599.8**

(22) Anmeldetag: **24.07.89**

(51) Int. Cl.⁴: **H04M 9/08 , H04M 9/00**

(30) Priorität: **29.07.88 DE 3825970**

(43) Veröffentlichungstag der Anmeldung:
**31.01.90 Patentblatt 90/05**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Böttger, Detlev, Dipl.-Ing.**
**Im Heimsoth 48**
**D-5840 Schwerte 4(DE)**
Erfinder: **Roth, Roland**
**Wiehagen 101**
**D-9650 Gelsenkirchen(DE)**

(54) **Verfahren zur Durchführung einer Steuerprozedur im Zusammenhang mit dem Direktansprechen eines Teilnehmers in einem rechnergesteuerten Kommunikationssystem insbesondere einem Key-Kommunikationssystem.**

(57) Nach der Anwahl einer Teilnehmerstelle (T1) und der Eingabe einer bestimmten Codeinformation sind zum Direktansprechen an dieser Teilnehmerstelle die zusätzlich zum Handapparat vorhandene Kombination aus Mikrophon (M) und Lautsprecher (La) einschaltbar. Der von der Rechnersteuerung gelieferte Befehl für die Einschaltung des Mikrophons (M) ist abhängig von einer Kenninformation (PT1), deren Eintrag in einem teilnehmerspezifisch vorhandenen Speicherplatz eines Arbeitsspeichers (A) durch den Teilnehmer veranlaßt werden kann. Während des Zeitraums, in dem das Mikrophon wirksam eingeschaltet ist, wird periodisch wiederkehrend ein Aufmerksamkeitston abgegeben.

EP 0 352 702 A2

# Verfahren zur Durchführung einer Steuerprozedur im Zusammenhang mit dem Direktansprechen eines Teilnehmers in einem rechnergesteuerten Kommunikationssystem, insbesondere einem Key-Kommunikationssystem

Die Erfindung betrifft ein Verfahren zur Durchführung einer Steuerprozedur im Zusammenhang mit dem unmittelbaren Ansprechen bzw. dem Freisprechen eines angewählten Teilnehmers in einem Kommunikationssystem mit einer zentralen Rechnersteuerung, insbesondere einem Key-Kommunikationssystem, wobei anstelle des Rufsignals nach dem Anwählen der betreffenden Teilnehmerstelle und der nachfolgenden Eingabe einer zusätzlichen, dieses Leistungsmerkmal anfordernden Codeinformation, die an dem der angewählten Teilnehmerstelle zugeordneten Endgerät zusätzlich vorhandene Kombination aus Mikrophon und Lautsprecher durch von der Rechnersteuerung zu dem Endgerät übertragene Befehle einschaltbar sind und bei der wirksamen Einschaltung ein Aufmerksamkeitszeichen abgegeben wird, wobei für den Anschluß eines Endgerätes an das Kommunikationssystem eine der Übertragung von Nutzinformationen dienende Nutzverbindung und zusätzlich eine Steuerverbindung schaltbar ist, über die wechselseitig Informationen zwischen dem Endgerät und der Rechnersteuerung übertragbar sind, die u.a. von dieser gelieferte Schaltbefehle betreffen und die auf Grund der bei der Betätigung von Tasten abgeleiteten Anreize gebildet werden, wobei der Rechnersteuerung Speicher zur Aufnahme von vermittlungsprozedur- und leistungsmerkmalprozedurrelevanten Steuerdaten zugeordnet sind.

Die voraussetzungsgemäß vorgesehene Nutzverbindung und die davon getrennte Steuerverbindung kann als Nutzkanal bzw. als Steuerkanal physikalisch auf dem gleichen Übertragungsmedium getrennt durch unterschiedliche Zeitlagen realisiert sein. Diese beiden Verbindungsmöglichkeiten können aber auch jeweils durch zwei Adernpaare gebildet werden. Für ein Key-Kommunikationssystem, bei dem beispielsweise die einzelnen Endeinrichtungen über zwei solche voneinander unabhängige und jeweils die Nutzverbindung und die Steuerverbindung bildenden Adernpaare sternförmig an das Kommunikationssystem angeschlossen sind ist es bekannt, neben der normalen Wähltastatur auch Funktionstasten und weitere leitungs- bzw. teilnehmerindividuelle Tasten vorzusehen. Durch eine Tastenbetätigung kann unmittelbar eine Belegung der dieser Taste zugeordneten Leitung bzw. auch die Verbindungsherstellung zwischen der betreffenden Endeinrichtung und einer anderen internen Teilnehmerstelle erfolgen. Bei einem solchen Kommunikationssystem wird weiterhin an jeder Endeinrichtung der vermittlungstechnische Zustand aller übrigen Endeinrichtungen und der Zustand der einzelnen externen Leitungen angezeigt. Neben der Anzeige durch optische Anzeigeelemente, die unmittelbar den einzelnen Tasten zugeordnet sind und mit diesen in der Regel eine Einheit bilden, können dem Teilnehmer auch optische Hinweise in Form einer Anzeige auf dem an der Endeinrichtung vorhandenem Display gegeben werden.

Modern konzipierte Kommunikationssysteme sind nicht nur zur eigentlichen Vermittlungssteuerung, sondern auch zu einer Steuerung bzw. Realisierung zusätzlicher, über den Vermittlungsvorgang hinausgehender Steuervorgänge befähigt. Solche zusätzlichen Funktionen werden im allgemeinen als Leistungsmerkmale bezeichnet, wobei eine große Anzahl unterschiedlichster Leistungsmerkmale bekannt ist. Derartige Leistungsmerkmale können entweder bei Belegen der Vermittlungseinrichtung oder aber während einer bereits bestehenden Gesprächsverbindung eingeleitet werden. Dies kann beispielsweise durch die Wahl bestimmter Ziffern bzw. Ziffernkombinationen und/oder durch die Betätigung sogenannter Funktionstasten erfolgen. Zu solchen Leistungsmerkmalen zählen beispielsweise akustische Hinweise für wartende Teil nehmer, die Verhinderung unerwünschter Verbindungen, die selbsttätige Rufweiterleitung, das Anklopfen und das unmittelbare Ansprechen eines angewählten Teilnehmers. Mittels dieses letztgenannten Leistungsmerkmals kann an einer angewählten Teilnehmerstelle bei Eingabe einer bestimmten Codeinformation die Einschaltung eines neben dem Handapparat zusätzlich vorhandenen Mikrophons und eines Lautsprechers bewirkt werden. Diese Codeinformation kann beispielsweise durch die Betätigung einer bestimmten Dienstetaste in Verbindung mit der Einwahl einer oder mehrerer Ziffern dem System vermittelt werden. Für den direkt angesprochenen Teilnehmer besteht dann eine Situation, wie bei der von ihm vorgenommenen Aktivierung der Freisprecheinrichtung. Bei der Einschaltung des Mikrophons wird ein Aufmerksamkeitston abgegeben. Wird dieser auf die Einschaltung des Mikrophons hinweisende Ton durch den Teilnehmer nicht registriert bzw. erfolgt diese Einschaltung während seiner Abwesenheit, so besteht grundsätzlich die Möglichkeit, Gespräche, die in dem betreffenden Raum geführt werden, mißbräuchlich ohne Kenntnis des betreffenden Teilnehmers abzuhören.

Die Aufgabe der Erfindung besteht darin, eine solche mißbräuchliche Inanspruchnahme dieses Leistungsmerkmals unter Beibehaltung der Einschaltmöglichkeit des Mikrophons zu unterbinden.

Dies erfolgt dadurch, daß zumindest der Befehl für die Einschaltung des Mikrophons am Endgerät des angewählten Teilnehmers in Abhängigkeit vom Eintrag bzw. vom Nichteintrag einer Kenninformation in einem teilnehmerspezifisch vorhandenem Speicherplatz eines Arbeitsspeichers erfolgt, daß diese Kenninformation auf Grund einer vom Teilnehmer vorab an die Rechnersteuerung übermittelbaren Signalisierungsinformation eingespeichert wird, daß durch eine nachfolgend übermittelte gleiche Signalisierungsinformation der Inhalt des betreffenden Speicherplatzes gelöscht wird.

Bei Implementierung des das Direktansprechen ermöglichenden Leistungsmerkmals hat also der einzelne Teilnehmer die Möglichkeit sich temporär gegen die von einem anderen Teilnehmer an seinem Endgerät zu veranlassende Einschaltung des Mikrophons zu schützen. Die erfindungsgemäß hierzu notwendige Einspeicherung der Kenninformation wird auf Grund einer vom Teilnehmer vorzunehmenden Prozedur bewirkt. Dies kann im einfachsten Falle durch die Betätigung einer hierfür programmierten Taste erfolgen. Die Löschung des betreffenden Eintrages in dem zugeordneten Speicherplatz kann dann z.B. durch die nachfolgende erneute Betätigung einer solchen Taste vorgenommen werden oder sie wird automatisch durch die Rechnersteuerung nach Ablauf eines einstellbaren, unterschiedliche Zeiten realisierenden Zeitgliedes veranlaßt.

Für ein Kommunikationssystem kann vorgesehen werden, daß grundsätzlich bei Inanspruchnahme des die Direktansprache eines anderen Teilnehmers ermöglichenden Leistungsmerkmals, sowohl der Einschaltbefehl für das Mikrophon, als auch für den Lautsprecher, übertragen wird. Wurde jedoch durch einen Teilnehmer die Abspeicherung der Kenninformation in dem ihm zugeordneten Speicherplatz veranlaßt, so wird der Einschaltbefehl für das Mikrophon unterdrückt.

Es kann jedoch auch in einem System vorgesehen sein, daß ohne eingespeicherter Kenninformation grundsätzlich nur der Einschaltbefehl für den Lautsprecher übertragen wird. Hat ein Teilnehmer die Absicht, auch die Einschaltung des Mikrophons zuzulassen, so kann er dies für einen von ihm bestimmbaren Zeitraum durch die von ihm bewirkte Einspeicherung dieser Kenninformation dem System mitteilen. Eine Weiterbildung der Erfindung sieht vor, daß bei der durch den anderen Teilnehmer vorgenommenen wirksamen Einschaltung des Mikrophons das abgegebene Aufmerksamkeitszeichen als Aufmerksamkeitston solange periodisch wiederkehrend abgegeben wird, solange diese Einschaltung besteht. In einem bestimmten, nicht zu kurzen Zeitabstand wird also der Teilnehmer durch diese akustische Information daran erinnert, daß an seinem Endgerät das für das sogenannte Freisprechen vorgesehene zusätzliche Mikrophon eingeschaltet ist.

Eine Weiterbildung der Erfindung sieht vor, daß während des Zeitraums, in dem die Kenninformation abgespeichert ist, diese Tatsache am Endgerät des diese Kenninformation bewirkenden Teilnehmers durch eine optische Signalisierung angezeigt wird.

Das erfindungsgemäße Verfahren wird nachstehend anhand einer FIG erläutert.

Die FIG zeigt eine schematische Darstellung einer Fernsprechvermittlungseinrichtung VE, an die Teilnehmerendeinrichtungen T1...Tn sternförmig angeschlossen sind. Die Sprachübertragung soll im Ausführungsbeispiel auf analoge Weise erfolgen. Für den Anschluß der Endeinrichtungen wird eine vieradrige Anschlußleitung verwendet, die jeweils aus einem die Nutzverbindung darstellenden Sprechadernpaar a/b und einem die Steuerverbindung darstellenden Signalisierungsadernpaar c/d besteht. Bei einem ausschließlich digitalen Vermittlungssystem wäre die Steuerverbindung und die für die Übertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage gebildet wird.

Zur im wesentlichen prozeduralen Anpassung werden die Teilnehmerendeinrichtungen T1...Tn über eine Anschalteeinheit AT, die auch die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt dies über die Anschalteeinheit AL. Die Steuerungsaufgaben des Systems übernimmt die zentrale Steuerrechner einheit ZSt, die über einen Systembus SB mit einer Speichereinheit SE, den genannten Anschalteeinheiten AT bzw. AL und den weiteren Systemkomponenten, wie beispielsweise der Koppeleinrichtung KN, einer für die Bildung der Mehrfrequenzcodezeichen dienenden Einheit MZ und einer für die Erzeugung der Hörtöne zuständigen Einheit HZ verbunden ist. Die Aufgaben der zentralen Steuerrechnereinheit sind im Ausführungsbeispiel auf zwei Prozessoren verteilt. Der Prozessor ZP soll beispielsweise der Vermittlungstechnischen Steuerung dienen und durch den Prozessor DP soll unter Einschaltung der ein Sendeteil S und ein Empfangsteil E enthaltenden Verarbeitungseinheiten Ve die Siganlisierungsbearbeitung erfolgen. Eine solche Verarbeitungseinheit Ve ist jedem Signalisierungsadernpaar c/d zugeordnet.

Über diese Signalisierungsadern c/d wird eine wechselseitige Informationsübertragung zwischen einer Endeinrichtung T und der zentralen Steuerrechnereinheit ZSt vorgenommen. Wie dies für die einzelne Funktionskomponenten zeigende Endeinrichtung T1 angedeutet ist, können in einem Tastensatz Ts neben den Zifferntasten Tw der Wähltastatur weitere Funktionstasten Tf vorhanden sein. Bei der manuellen Betätigung der leitungs- bzw. teilnehmerindividuellen Tasten kann unmittelbar eine Belegung der betreffenden Leitung, z.B. der externen Leitung L erfolgen und es kann die Verbindungsherstellung zu einem internen Teilnehmer vorgenommen werden. Das Kommunikationssystem VE soll ein Key-System darstellen, bei dem also an jeder Endeinrichtung der vermittlungstechnische Zustand aller übrigen Endeinrichtungen und der Belegungszustand der einzelnen externen Leitungen angezeigt wird. Als Anzeigeelemente können beispielsweise Leuchtdioden dienen, die in den jeweiligen Funktionstasten Tf integriert sind. Die Informationsübertragung von der Rechnersteuerung ZSt der Vermittlungseinrichtung zu den einzelnen Endeinrichtungen T1...Tn kann sich beispielsweise auf Einstellinformationen für diese Leuchtelemente beziehen, die zu unterschiedlichen Leuchtzuständen führen können. Dies erfolgt unter Einbeziehung der in jeder Endeinrichtung vorhandenen Steuereinheit PE. Im Ausführungsbeispiel sollen die von der Vermittlungseinrichtung VE zu einer Endeinrichtung über die Signalisierungsadern c/d übertragenen Informationen durch eine binäre Spannungsmodulation und die in der Gegenrichtung zu übertragenden Informationen durch eine binäre Strommodulation übermittelt werden. Mit letzterer wird dann beispielsweise die an der jeweiligen Endeinrichtung vorgenommene Betätigung einzelner Tasten signalisiert. Dies soll in Verbindung mit der Steuereinheit PE durch die Einheit IR erfolgen. Die in der Gegenrichtung auf Grund der vorgesehenen Spannungsmodulation an den jeweiligen Signalisierungsadern auftretenden Informationsbits werden in Zusammenwirkung mit der Steuereinheit PE durch die Einheit UD registriert. Sie führen zur entsprechenden Ansteuerung der genannten Leuchtelemente LF. Zusätzlich oder anstelle dieser Leuchtelemente kann auch eine entsprechende Darstellung auf einem an der Endeinrichtung vorhandenem Display DL erfolgen. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display angezeigt werden.

Über das jeweilige Adernpaar a/b werden die Sprachinformationen übertragen. Mit diesen Sprechadern ist die Sprechschaltung SP verbunden. Sie dient im Zusammenhang mit dem Handapparat HA der Verarbeitung der übertragenen Sprachinformationen und bildet den Leitungsabschluß. Neben dem Handapparat kann noch eine weitere Einheit FS vorhanden sein, die zur Ermöglichung des Freisprechens ein Mikrophon M und einen Lautsprecher La enthält.

Ein derartiges Kommunikationssystem VE ist in seiner Grundstruktur bekannt. Es erübrigt sich also insoweit ein detaillierte Darstellung der schaltungstechnischen Realisierung als auch eine Beschreibung der Vorgänge bei einem Verbindungsaufbau und dem Verbindungsabbau. Es sei lediglich erwähnt, daß die Prozessoren ZP und DP über den Systembus SB Zugriff zu den in der Speichereinrichtung SE abgelegten Daten haben. Diese betreffen u.a. das in dem Speicher P abgelegte gesamte Systemprogramm und die zu ihm gehörenden und in einem Arbeitsspeicher A enthaltenen betriebstechnischen Daten. In dem Speicherteil KD sind die Kundendaten abgelegt. Hierzu gehören beispielsweise die den einzelnen Teilnehmerendgeräten T zugeteilten Berechtigungen für die Inanspruchnahme bestimmter Leistungsmerkmale. Das Konfigurieren dieser Daten kann beispielsweise über die Eingabetastatur einer als Betriebsterminal festlegbaren Endeinrichtung erfolgen.

Für die Realisierung von leistungsmerkmalsspezifischen Steuerprozeduren beinhaltet die Steuerrechnereinheit ZSt einzelne Programmsteuerungen, die auf die in den entsprechenden Speichern enthaltenen Steuerdaten zugreifen. So soll beispielsweise für das Kommunikationssystem VE die Möglichkeit bestehen, einem Teilnehmer direkt anzusprechen. Das bedeutet, daß nach Anwahl des betreffenden Teilnehmers und weiterer Eingabe einer bestimmten Codeinformation die neben dem Handapparat am jeweiligen Endgerät zusätzlich vorhandene Einheit FS aktivierbar ist. Es besteht also die Möglichkeit, am Endgerät des gewünschten Gesprächspartners die Einschaltung des Mikrophons M und des Lautsprechers La auf Grund der eingegebenen Codeinformation zu veranlassen. Diese Information kann beispielsweise durch die manuelle Betätigung einer Servicetaste Ti und nachfolgender Betätigung einer Zifferntaste Tw der Rechnersteuerung über die Signalisierungsadern c/d übermittelt werden. Der gewünschte Teilnehmer kann auf diese Weise direkt angesprochen werden. Dieser angesprochene Teilnehmer kann ohne Abheben des Handapparates freisprechend antworten.

Diese Einschaltung des Mikrophons am Endgerät eines angewählten Teilnehmers, kann dann in den Fällen, in denen diese vorgenommene Einschaltung durch den betreffenden Teilnehmer nicht registriert wird, mißbräuchlich zum Abhören des angewählten Teilnehmers benutzt werden. Solange der anwählende Teilnehmer die aufgebaute Verbindung aufrecht erhält sind nämlich über das eingeschaltete Mikrophon, die in einer bestimmten räumlichen Nähe zum Endgerät geführten Gespräche abzuhören. Ein Teilnehmer hat nun die Möglichkeit, sich dagegen zu schützen. Unter der Voraussetzung, daß vom System auf Grund der entsprechenden Anforderung durch einen Teilnehmer sowohl der Lautsprecher La als auch das Mikrophon M der zusätzlich vorhandenen Einheit FS einschaltbar ist, kann vom Teilnehmer während eines von ihm bestimmbaren Zeitraums zumindest die Einschaltung des Mikrophons M unterbunden werden. Das Leistungsmerkmal ist also im Kundendatenspeicher grundsätzlich freigegeben. Es kann jedoch zum Erreichen eines temporär gültigen Schutzes eingeschränkt werden. Hierzu kann der Teilnehmer z.B. durch die manuelle Betätigung einer Taste dem System eine bestimmte Signalisierungsinformation übermitteln. Auf Grund dieser Information wird in einem, diesen betreffenden Teilnehmer zugeordneten Speicherplatz eine entsprechende Kenninformation eingespeichert. Diese Einspeicherung erfolgt also in einem der jeweils individuell zugeordneten Speicherplätze PT1 bis PTn eines Arbeitsspeichers A. Wird von einem Teilnehmer das die unmittelbare Ansprache eines anderen Teilnehmers ermöglichende Leistungsmerkmal beansprucht, so wird zunächst von der Rechnersteuerung der dem angewählten Teilnehmer zugeordnete Speicherplatz auf den Eintrag einer solchen Kenninformation hin abgefragt. Ist eine solche Kenninformation eingespeichert, dann wird zumindest der Einschaltbefehl für das Mikrophon unterdrückt. Durch die von diesem betreffenden Teilnehmer verursachte Einspeicherung dieser Kenninformation wurde vorab signalisiert, daß die ansonsten mögliche Einschaltung des Mikrophons M solange unterbunden werden soll, solange er nicht durch eine erneute Tastenbetätigung derjenigen Taste, der diese Funktion zugeordnet wurde, die Löschung der eingetragenen Kenninformation veranlaßt. Ab diesem Zeitpunkt kann dann von einem Teilnehmer das Leistungsmerkmal voll in Anspruch genommen werden, d.h. es wird dann der Einschaltbefehl für das Mikrophon M und für den Lautsprecher La zu dem betreffenden Endgerät übertragen.

Es kann auch vorgesehen sein, daß ohne Tätigwerden eines Teilnehmers durch einen anderen Teilnehmer lediglich der an seinem Endgerät zusätzlich vorgesehene Lautsprecher La aktiviert werden kann. Die Aktivierung des Mikrophons ist von einer durch den betreffenden Teilnehmer veranlaßten Einspeicherung einer Kenninformation abhängig. Ist diese Kenninformation in dem diesen Teilnehmer zugeordneten Speicherplatz enthalten, so wird bei einer entsprechenden Anforderung durch einen Teilnehmer neben dem Einschaltbefehl für den Lautsprecher La auch der Einschaltbefehl für das Mikrophon M übertragen.

In beiden genannten Fällen hat also ein Teilnehmer die Möglichkeit, für einen bestimmten Zeitraum entweder die Einschaltung des Mikrophones zu unterbinden bzw. wie dies für den letztgenannten Fall zutrifft, die Einschaltung des Mikrophones zu ermöglichen. Ist also eine der beiden genannten Möglichkeiten in dem Kommunikationssystem VE realisiert, so kann der Zeitraum, in dem das Mikrophon am Endgerät eines Teilnehmers durch einen anderen Teilnehmer aktiviert und damit sein Endgerät in den Bereitszustand geschaltet werden kann, durch den Teilnehmer selbst bestimmt werden. Während dieses genannten Zeitraums kann eine auf die Einschaltbarkeit bzw. auf die Nichteinschaltbarkeit des Mikrophons hinweisende optische Signalisierung erfolgen.

Durch einen entsprechenden Inhalt des einem angewählten Teilnehmer zugeordneten Speicherplatzes PT1 bis PTn ist sowohl die Einschaltung des Mikrophons M als auch die Einschaltung des Lautsprechers La möglich. Es wird bei deren durch einen Teilnehmer vorgenommen gemeinsamen Aktivierung über den Lautsprecher ein sich periodisch wiederholender Aufmerksamkeitston abgegeben. Auf diese Weise wird dann sichergestellt, daß ein Teilnehmer in jedem Fall die Tatsache, daß an seinem Endgerät das Mikrophon aktiviert wurde, registrieren kann. Nimmt er also nicht den möglichen temporären Abhörschutz in Anspruch, so wird durch diese Einspeisung des Aufmerksamkeitstones der Teilnehmer auf die bestehende Abhörmöglichkeit hingewiesen.

Im Ausführungsbeispiel ist mit TG der für die gesamte Taktversorgung vorhandene Taktgenerator und mit SV die der Stromversorgung dienende Einheit bezeichnet.

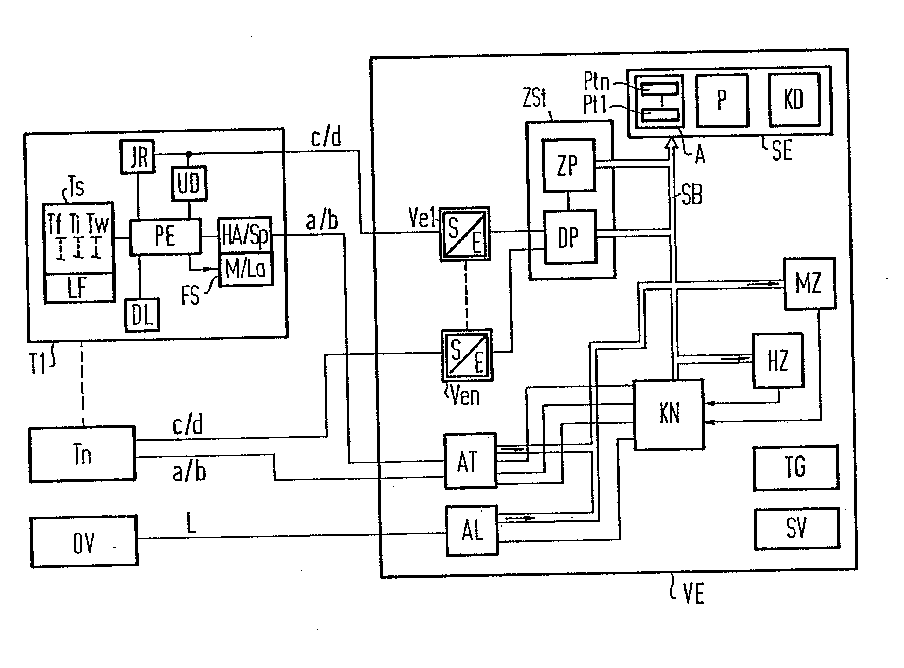

## Ansprüche

1. Verfahren zur Durchführung einer Steuerprozedur in Zusammenhang mit dem unmittelbaren Ansprechen bzw. dem Freisprechen eines angewählten Teilnehmers in einem Kommunikationssystem mit einer zentralen Rechnersteuerung, insbesondere einem Key-Kommunikationssystem, wobei anstelle des Rufsignals nach dem Anwählen der betreffenden Teilnehmerstelle und der nachfolgenden Eingabe einer zusätzlichen, dieses Leistungsmerkmal anfordernden Codeinformation die an dem der angewählten Teilnehmerstelle zugeordneten Endgerät zusätzlich vorhandene Kombination aus Mikrophon und Lautsprecher durch von der Rechnersteuerung zu dem Endgerat übertragene Befehle einschaltbar sind, und bei deren wirksamen Einschaltung ein Aufmerksamkeitszeichen abgegeben wird, wobei für den Anschluß eines Endgerätes an das Kommunikationssystem eine der Übertragung von Nutzinformationen dienende Nutzverbindung und zusätzlich eine Steuerverbindung schaltbar ist, über die wechselseitig Informationen zwischen dem Endgerät und der zentralen Rechnersteuerung übertragbar sind, die unter anderem von dieser gelieferten Schaltbefehle betreffen und auf Grund der bei der Betätigung von Tasten abgeleiteten Anreize gebildet werden und wobei der Rechnersteuerung Speicher zur Aufnahme von vermittlungsprozedur- und leistungsmerkmalprozedurrelevanten Steuerdaten zugeordnet sind,

**dadurch gekennzeichnet,** daß zumindest der Befehl für die Einschaltung des Mikrophons (M) am Endgerät (T1) des angewählten Teilnehmers in Abhängigkeit vom Eintrag bzw. vom Nichteintrag einer Kenninformation in einem teilnehmerspezifisch vorhandenen Speicherplatz (PT1) eines Arbeitsspeichers (A) erfolgt, daß diese Kenninformation auf Grund einer vom Teilnehmer vorab an die Rechnersteuerung (ZSt) übermittelbare Signalisierungsinformation eingespeichert wird, daß durch eine nachfolgend übermittelte gleiche Signalisierungsinformation der Inhalt des betreffenden Speicherplatzes gelöscht wird.

2. Verfahren nach Anspruch 1,

**dadurch gekennzeichnet,** daß nach der Abgabe der zusätzlichen Codeinformation durch den die Verbindung einleitenden Teilnehmer bei fehlender Kenninformation in den dem jeweils angewählten Teilnehmer diesbezüglich zugeordneten Speicherplatz (PT1 bis PTn) der Einschaltbefehl sowohl für den Lautsprecher (La) als auch für das Mikrophon (M) übertragen wird, während bei einer abgespeicherten Kenninformation zumindest der Einschaltbefehl für das Mikrophon (M) unterdrückt wird.

3. Verfahren nach Anspruch 1,

**dadurch gekennzeichnet,** daß nach der Abgabe der zusätzlichen Codeinformation durch den die Verbindung einleitenden Teilnehmer bei fehlender Kenninformation im zugeordneten Speicherplatz (PT1 bis PTn) nur der Einschaltbefehl für den Lautsprecher (La) übertragen wird, während bei abgespeicherter Kenninformation neben dem Einschaltbefehl für den Lautsprecher (La) auch der Einschaltbefehl für das Mikrophon (M) übertragen wird.

4. Verfahren nach einem der Ansprüche 1 bis 3,

**dadurch gekennzeichnet,** daß in den Fällen, in denen die Einschaltung des Mikrophons (M) bewirkt werden kann, mit der tatsächlich vorgenommenen Einschaltung dieses Mikrophons (M) als Aufmerksamkeitszeichen ein periodisch wiederkehrender Aufmerksamkeitston abgegeben wird.

5. Verfahren nach Anspruch 1,

**dadurch gekennzeichnet,** daß während des Zeitraums, in dem die Kenninformation in dem teilnehmerspezifisch vorhandenem Speicherplatz abgespeichert ist, am Endgerät des diese Kenninformation bewirkenden Teilnehmers eine diese Tatsache anzeigende optische Signalisierung erfolgt.